# EUROPEAN PATENT APPLICATION

(11) **EP 4 002 625 A1**
(43) Date of publication of application: **25.05.2022**
(21) Application number: 20207563.6
(22) Date of filing: 13.11.2020
(51) Int. Cl.: H02J 3/00, H02J 3/32, H02J 3/38

(54) **MITIGATION OF PEAK POWER EXCHANGE BETWEEN SUPPLIERS AND FACILITIES**

(71) Applicant: ABB Schweiz AG, 5400 Baden (CH)
(72) Inventor: GUTERMUTH, Georg, 69115 Heidelberg (DE); LENDERS, Felix, 64293 Darmstadt (DE)
(74) Representative: Maiwald Patent- und Rechtsanwaltsgesellschaft mbH

(57) **Abstract**

There is provided a computer-implemented method for determining a mitigated peak power exchange value for power exchange between a supplier (150) and a facility (100). The method comprises receiving a timeseries comprising power exchange values for power exchange between the supplier and the facility over a predetermined timeperiod; executing an optimization algorithm configured to determine a mitigated maximum power exchange value in the timeseries using data defining one or more peak shaving capabilities (102-108) at the facility as variables; and outputting the determined mitigated maximum power exchange value.

## Description

### FIELD OF THE INVENTION

The invention relates to mitigation of peak power exchange between suppliers and facilities.

### BACKGROUND

For large users of electrical energy such as manufacturing facilities, the electricity bill typically consists of two components: energy consumption and demand charges. Energy consumption represents the total amount of energy consumed over a certain timeperiod regardless of instantaneous demand variations. Demand charges apply to the power demand and may be based on the maximum power demand reached within a certain timeperiod. For large users, demand charges typically account for the bulk of the costs.

Current energy cost minimization solutions focus on reducing or shifting energy consumption to ensure that the peak power demand stays under a limit specified in the supply contract, thereby reducing demand charges. This is known in the art as "peak shaving". Load management systems may operate using one or more peak shaving capabilities of the facility (including for example shiftable loads, sheddable loads, on-site generators, and energy storage) to perform load shedding (switching off non-critical, sheddable loads during periods of peak demand), load shifting (using shiftable loads to move energy consumption to timeperiods outside the period of peak demand or to when energy is cheaper), and load displacement (using on-site generators and/or energy storage to offset peak power demand).

The load management system may use an optimization algorithm to determine how to operate the peak shaving capabilities such that peak power demand remains below the limit specified in the supply contract.

### SUMMARY

There is a need for more effective mitigation of peak power exchange between suppliers and facilities. This need is met by the subject-matter of the independent claims. Optional features are set forth by the dependent claims.

According to a first aspect, there is provided a computer-implemented method for determining a mitigated peak power exchange value for power exchange between a supplier and a facility. The method comprises receiving a timeseries comprising power exchange values for power exchange between the supplier and the facility over a predetermined timeperiod; executing an optimization algorithm configured to determine a mitigated maximum power exchange value in the timeseries using data defining one or more peak shaving capabilities at the facility as variables; and outputting the determined mitigated maximum power exchange value.

In this way, the claimed subject-matter finds a mitigated (e.g. minimum) possible peak power demand value under given boundaries, thus allowing for cost reductions by reducing demand charges. The minimum possible peak power demand value represents a realistic limit to which the facility can adhere, thus enabling the facility operator to choose a supply contract with a lower limit to reduce charges. The said minimum value provides a guideline on where to set the limit and thus how to arrange the contract. The agreed limit may of course include a margin of safety with respect to the determined minimum value. The claimed method may be performed by a planning tool implemented as an app and can furthermore be offered as an optimization component for a power management system.

Numerous possible implementations of the optimization algorithm are envisaged by the present disclosure. For example, where the received timeseries is one of a plurality of timeseries defining a distribution of power exchange scenarios at the facility, executing the optimization algorithm may comprise performing robust optimization using the plurality of timeseries as input. Performing robust optimization may comprise performing worst case robust optimization to mitigate the maximum power exchange value among all of the power exchange scenarios. Alternatively, performing robust optimization may comprise mitigating the maximum power exchange value among a predetermined proportion of the power exchange scenarios. Alternatively, performing robust optimization may comprise performing L2-average robust optimization to mitigate the mean case maximum power exchange value among the power exchange scenarios. Alternatively, performing robust optimization may comprise performing L1-average robust optimization to mitigate the median case maximum power exchange value among the power exchange scenarios. Alternatively, performing robust optimization comprises performing scenario tree online optimization using the plurality of timeseries as input.

The present disclosure also envisages that the optimization may be performed piecewise. More particularly, where the received timeseries comprises at least first and second subsets of power exchange values within the predetermined timeperiod, executing the optimization algorithm may comprise determining a said mitigated maximum power exchange value in each of the subsets.

To provide a more realistic mitigated maximum power exchange value, executing the optimization algorithm may further comprise using a cost function in relation to the one or more capabilities of the peak shaving system to determine a tradeoff between mitigation of the maximum power exchange value and capability cost. The method may additionally or alternatively comprise performing a cost-benefit analysis to determine the tradeoff.

The methods described herein are applicable both in the case that power supplied by the supplier over the grid is consumed at the facility and in the case that the facility generates power which is fed back to the grid. Thus, the power exchange may relate to power intake or to power infeed, wherein the maximum power exchange value is a maximum power intake value or a maximum power infeed value, respectively, and wherein the optimization algorithm is configured to determine a mitigated maximum power intake value or a mitigated maximum power infeed value, respectively. Both mitigated maximum power values (infeed and intake) may help to reduce volatility on the grid side as well as the physical connection capacity (incl. transformer capacity) between e.g. the facility and the grid.

According to a second aspect, there is provided a power management method comprising: performing the method of the first aspect to obtain from the optimization algorithm data defining a power management solution for operating the peak shaving capabilities of the facility so as to maintain power exchange values for power exchange between the supplier and the facility at or below the mitigated maximum power exchange value; and operating the one or more peak shaving capabilities of the facility according to the power management solution.

According to a third aspect, there is provided a planning tool configured to perform the method of the first aspect.

According to a fourth aspect, there is provided a power management system configured to perform the method of the second aspect.

According to a fifth aspect, there is provided a computer program product comprising instructions which, when executed by a computing device, enable/cause the computing device to carry out the method of the first or second aspect.

According to a sixth aspect, there is provided a computer-readable medium comprising instructions which, when executed by a computing device, enable/cause the computing device to carry out the method of the first or second aspect.

The "timeseries" and their "power exchange values" disclosed herein may relate to power consumption data and/or power generation data and may comprise measured and/or predicted data. "Power exchange" may accordingly be understood to relate to power consumption and/or generation.

By "mitigate" is meant that the maximum power exchange value is reduced to some extent (compared to that appearing in the received timeseries). Preferably the maximum power exchange value is minimized but it will be appreciated that the subject-matter described herein may also provide for beneficial energy cost reductions via non-optimal solutions.

As used herein, "capabilities" refers to any apparatus, device or system which may be used to influence power demand at the facility, in particular to reduce peak power demand. For example, shiftable loads, sheddable loads, on-site generators, and energy storage may be described as peak shaving capabilities. Other capabilities may provide for transformation of energy from one form into another. The term "capabilities" and "flexibilities" are used herein interchangeably.

By "facility" is meant a site, building or piece of equipment which consumes and/or generates energy. A facility may thus be described as an energy consumer, an energy generator, or both. The facility may be a non-industrial facility such as a commercial or private facility, e.g. an office building or a household, or an industrial facility, in particular an industrial site such as an industrial plant, especially those including any combination of generators, consumers and storage for electricity. The term "facility" encompasses not only a site, building or piece of equipment as a whole but also individual parts, sections or components thereof.

Although the specific examples given below relate to the supply of electrical energy, it will be understood that the described systems and methods are equally applicable to the supply of other commodities such as water, gas, heat, transportation capacity, or telecommunication bandwidth.

The terms "module", "system", "circuitry", and "tool" are used herein interchangeably.

The invention may include one or more aspects, examples or features in isolation or combination whether or not specifically disclosed in that combination or in isolation.

These and other aspects of the invention will be apparent from and elucidated with reference to the embodiments described hereinafter.

### BRIEF DESCRIPTION OF THE DRAWINGS

A detailed description will now be given, by way of example only, with reference to the accompanying drawings, in which:-
Figure 1 illustrates a facility comprising a power management system;
Figure 2 is a histogram illustrating power demand at the facility of figure 1 before and after optimization as described herein;
Figure 3 shows a timeseries illustrating power exchange values before and after optimization as described herein; and
Figure 4 illustrates a computing device that can be used in accordance with the systems and methods disclosed herein.

### DETAILED DESCRIPTION

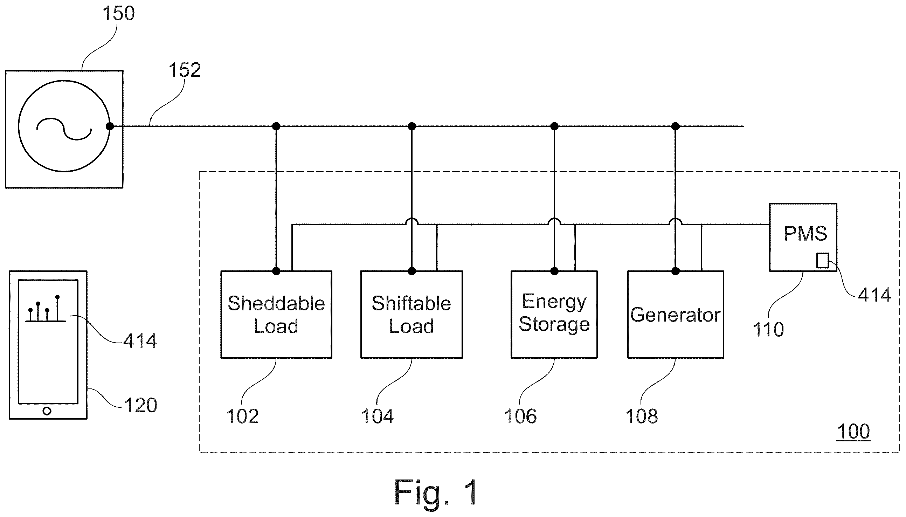

Figure 1 illustrates a manufacturing facility 100 which receives electrical energy from a supplier 150 via the grid 152. The facility 100 comprises (among other consuming and/or generating devices not shown in figure 1 for simplicity) various peak shaving capabilities comprising a sheddable load 102, a shiftable load 104, energy storage 106, and a generator 108. It will be appreciated that the peak shaving capabilities shown in figure 1 are for the purposes of illustration only and that any combination of one or more peak shaving capabilities is contemplated by the present disclosure. The facility further comprises a power management system 110 coupled to the peak shaving capabilities 102-108 and configured to operate the peak shaving capabilities 102-108 so as to reduce power demand at the facility 100 when necessary. In particular, the power management system 110 is configured to operate the peak shaving capabilities 102-108 according to a power management solution. As described below, the power management solution is determined by an optimization component as described herein for operating the peak shaving capabilities 102-108 so as to maintain power exchange values for power exchange between the supplier 150 and the facility 100 at or below a mitigated maximum power exchange value.

Further illustrated in figure 1 is a planning tool 120 configured to perform a method for determining the mitigated peak power exchange value for power exchange between the supplier 150 and the facility 100. The planning tool 120 is shown in figure 1 in the form of a smartphone running an app performing the method but it will be appreciated that other implementations are possible. An optimization component 414 of the app receives a timeseries comprising power exchange values for power exchange between the supplier 150 and the facility 100 over a predetermined (e.g. historical) timeperiod or interval, for example one year. The optimization component 414 executes an optimization algorithm configured to determine the mitigated maximum power exchange value in the timeseries using data defining the peak shaving capabilities 102-108 at the facility 100 as variables. The optimization component 414 outputs the determined mitigated maximum power exchange value, which may be used in the planning of operations at the facility 100, in particular to arrange (e.g. to optimize) electricity supply contracts, as described above. A further use-case is to mitigate hardware (transformer, switchgear, cables) extension of the electrical connection to the grid.

As also illustrated in figure 1, the optimization component 414 may additionally or alternatively form part of the power management system 110. In any case, the optimization component 414 is further configured to determine, using the optimization algorithm, data defining the power management solution for use by the power management system 110 in operating the peak shaving capabilities 102-108 of the facility 100 so as to maintain power exchange values for power exchange between the supplier 150 and the facility 100 at or below the mitigated maximum power exchange value.

The optimization component 414 thus provides for minimization of peak energy intake at the facility 100. The subject-matter disclosed herein may be applied in the context of energy cost minimization and applies to buildings as well as larger areas such as sites or parts of grids (e.g. a microgrid, distribution grid).

Previous optimization components functioned with the optimization goal of retaining power demand below a given threshold. The inventors have recognized that such methods fail to exploit the full potential of the peak shaving capabilities 102-108, which may not be needed simply to retain power demand under the threshold.

According to the present disclosure, data defining the peak shaving capabilities 102-108 is provided to the optimization component 414, which finds the minimum peak power exchange value that can be obtained using those capabilities. This can be done by setting up a cost minimizing optimization function that has a cost attached to the usage of the peak shaving capabilities as well as to the (mitigated) peak value.

Here, the peak power exchange value refers to the largest value of power exchange in the timeperiod. Thus, in contrast to previous methods, the optimization component 414 aims to push the peak value down as far as possible and not simply to find a solution which keeps the peak value below a given limit. The optimization component 414 provides a peak value which need never be exceeded and not a yes/no answer regarding whether a limit can be respected.

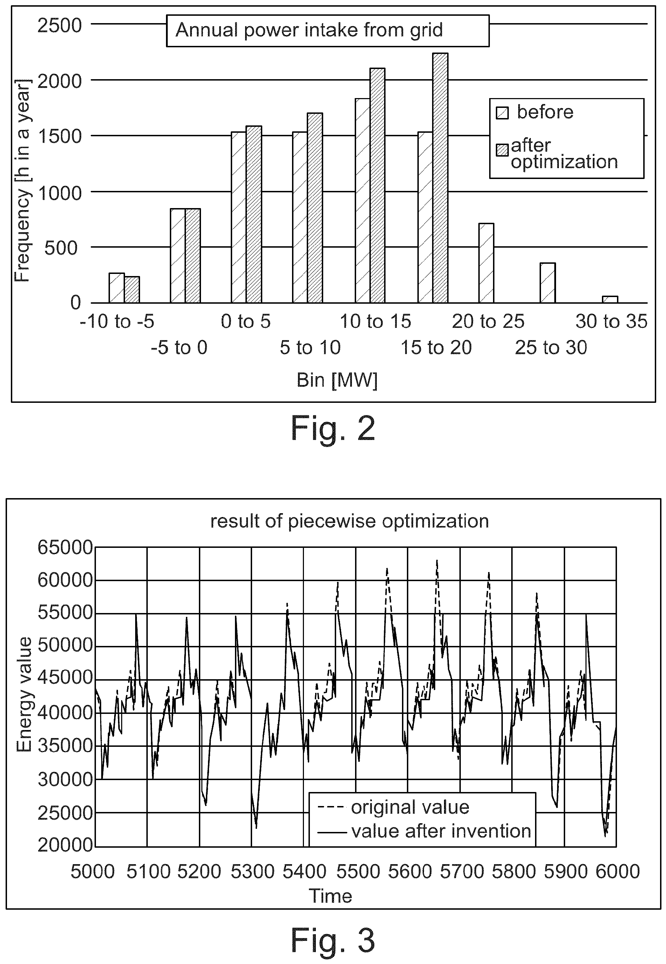

Figure 2 is a histogram illustrating power demand at the facility 100 before and after optimization as described herein, demonstrating the ability of the optimization component 414 to minimize the largest power intake from the grid 152. The dotted histogram shows power intake from the grid 152 at the facility 100 before optimization. Power intake ranges from -9MW to 32MW for each hour in one year (and thus there are hours in which a surplus of up to 9MW is fed back into the grid 152). The optimization component 414 minimizes the range to -8MW to 19MW, as shown by the dashed histogram. The new maximum of 19MW does not represent a given limit but the minimized maximum power exchange value that can be obtained using the peak shaving capabilities 102-108.

If the input timeseries is uncertain (e.g. a forecast of future power consumption or generation) and thus realized as a distribution of scenarios, the optimization component 414 may use robust optimization. Robust optimization can be implemented in several ways, for example:-
∘ Worst case robust optimization: minimize the worst case (100%) maximum power exchange value among all scenarios.
∘ As above but taking a value (e.g. 95%) requesting that in 95% of scenarios the optimized limit is kept.
∘ L2-Average case robust optimization: minimize the mean case maximum power exchange value among all scenarios.
∘ L1-Average case robust optimization: minimize the median case maximum power exchange value among all scenarios.
∘ Scenario tree online optimization: here the assumption is that decisions can be taken in time steps. The uncertainties in input data are such that with every time step some of the input data becomes certain and input data that is certain for a given time-step stays certain for all future time steps. Applying scenario tree optimization (such as that described in "Application of an explicit min-max MPC to a scaled laboratory process", D.M. de la Pena, 2005) gives an optimization result that is not as conservative in maximum power exchange value as worst-case optimization, but covers many more scenarios than those excluded by L2-Average case robust optimization.

The optimization component 414 may furthermore optimize "piecewise", meaning that the minimum possible limit is not determined (as above) for the complete given timeperiod but for different subsets of power exchange values. In one example, specific limits are optimized for nighttime (e.g. 19:00-7:00) and for daytime (e.g. 7:00-19:00), as illustrated in figure 3.

The data defining the peak shaving capabilities 102-108 comprises cost functions depending on the amount of peak shaving and not a fixed amount of flexibility that can be used. By introducing a cost function for the various capabilities 102-108, the optimization component 414 may provide a reasonable weighted optimum between price and "minimum energy intake". This may be a more realistic value, as the capabilities 102-108 may be associated with a cost that might increase too much when using the capabilities to the limits.

It will be understood that the present disclosure is not limited to minimizing the maximum power exchange value but any scalar statistical characteristic of the distribution of power exchange values can be optimized. Examples of scalar statistical characteristics include the mean value, median (middle value), maximum value(s), minimum value, variance (as measure of spread), range (as measure of spread), or any combination of those values. When the input data has a stochastic nature, the result can be a certain distribution, median or "most likely" value.

Thus provided by the present disclosure is a component that optimizes based on an interval timeseries data and given flexibilities in order to determine the minimum possible peak.

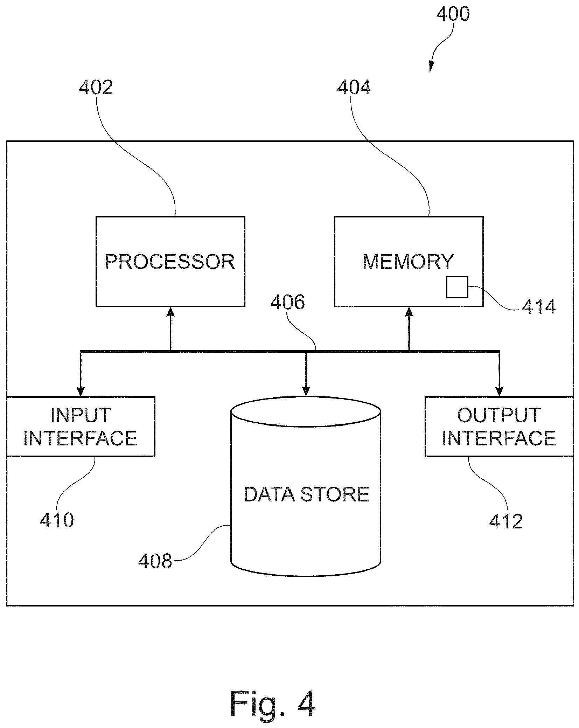

Referring now to figure 4, a high-level illustration of an exemplary computing device 400 that can be used in accordance with the systems and methodologies disclosed herein is illustrated. In particular, the computing device may be used to implement the above-described planning tool 120 and/or the power management system 110. The computing device 400 includes at least one processor 402 that executes instructions that are stored in a memory 404. The instructions may be, for instance, instructions for implementing functionality described as being carried out by one or more components discussed above (n particular, the optimization component 414) or instructions for implementing one or more of the methods described above. The processor 402 may access the memory 404 by way of a system bus 406. In addition to storing executable instructions, the memory 404 may also store conversational inputs, scores assigned to the conversational inputs, etc.

The computing device 400 additionally includes a data store 408 that is accessible by the processor 402 by way of the system bus 406. The data store 408 may include executable instructions, log data, etc. The computing device 400 also includes an input interface 410 that allows external devices to communicate with the computing device 400. For instance, the input interface 410 may be used to receive instructions from an external computer device, from a user, etc. The computing device 400 also includes an output interface 412 that interfaces the computing device 400 with one or more external devices. For example, the computing device 400 may display text, images, etc. by way of the output interface 412.

It is contemplated that the external devices that communicate with the computing device 400 via the input interface 410 and the output interface 412 can be included in an environment that provides substantially any type of user interface with which a user can interact. Examples of user interface types include graphical user interfaces, natural user interfaces, and so forth. For instance, a graphical user interface may accept input from a user employing input device(s) such as a keyboard, mouse, remote control, or the like and provide output on an output device such as a display. Further, a natural user interface may enable a user to interact with the computing device 400 in a manner free from constraints imposed by input device such as keyboards, mice, remote controls, and the like. Rather, a natural user interface can rely on speech recognition, touch and stylus recognition, gesture recognition both on screen and adjacent to the screen, air gestures, head and eye tracking, voice and speech, vision, touch, gestures, machine intelligence, and so forth.

Additionally, while illustrated as a single system, it is to be understood that the computing device 400 may be a distributed system. Thus, for instance, several devices may be in communication by way of a network connection and may collectively perform tasks described as being performed by the computing device 400.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

It will be appreciated that the aforementioned circuitry may have other functions in addition to the mentioned functions, and that these functions may be performed by the same circuit.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

While the invention has been illustrated and described in detail in the drawings and foregoing description, such illustration and description are to be considered exemplary and not restrictive. The invention is not limited to the disclosed embodiments.

Other variations to the disclosed embodiments can be understood and effected by those skilled in the art, from a study of the drawings, the disclosure, and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used advantageously. A computer program may be stored/distributed on a suitable medium, such as an optical storage medium or a solid-state medium supplied together with or as part of other hardware, but may also be distributed in other forms, such as via the internet or other wired or wireless communications systems. Any reference signs in the claims should not be construed as limiting the scope.

## Claims

1. A computer-implemented method for determining a mitigated peak power exchange value for power exchange between a supplier (150) and a facility (100), the method comprising:
receiving a timeseries comprising power exchange values for power exchange between the supplier and the facility over a predetermined timeperiod;
executing an optimization algorithm configured to determine a mitigated maximum power exchange value in the timeseries using data defining one or more peak shaving capabilities (102-108) at the facility as variables; and
outputting the determined mitigated maximum power exchange value.

2. The method of claim 1, wherein the received timeseries is one of a plurality of timeseries defining a distribution of power exchange scenarios at the facility (100), and wherein executing the optimization algorithm comprises performing robust optimization using the plurality of timeseries as input.

3. The method of claim 2, wherein performing robust optimization comprises performing worst case robust optimization to mitigate the maximum power exchange value among all of the power exchange scenarios.

4. The method of claim 2, wherein performing robust optimization comprises mitigating the maximum power exchange value among a predetermined proportion of the power exchange scenarios.

5. The method of claim 2, wherein performing robust optimization comprises performing L2-average robust optimization to mitigate the mean case maximum power exchange value among the power exchange scenarios.

6. The method of claim 2, wherein performing robust optimization comprises performing L1-average robust optimization to mitigate the median case maximum power exchange value among the power exchange scenarios.

7. The method of claim 2, wherein performing robust optimization comprises performing scenario tree online optimization using the plurality of timeseries as input.

8. The method of any preceding claim, wherein the received timeseries comprises at least first and second subsets of power exchange values within the predetermined timeperiod, and wherein executing the optimization algorithm comprises determining a said mitigated maximum power exchange value in each of the subsets.

9. The method of any preceding claim, wherein executing the optimization algorithm further comprises using a cost function in relation to the one or more capabilities of the peak shaving system to determine a tradeoff between mitigation of the maximum power exchange value and capability cost.

10. The method of any preceding claim, wherein the power exchange relates to power intake or to power infeed, wherein the maximum power exchange value is a maximum power intake value or a maximum power infeed value, respectively, and wherein the optimization algorithm is configured to determine a mitigated maximum power intake value or a mitigated maximum power infeed value, respectively.

11. A power management method comprising:
performing the method of any preceding claim to obtain from the optimization algorithm data defining a power management solution for operating the peak shaving capabilities (102-108) of the facility (100) so as to maintain power exchange values for power exchange between the supplier (150) and the facility at or below the mitigated maximum power exchange value; and
operating the one or more peak shaving capabilities of the facility according to the power management solution.

12. A planning tool (120) configured to perform the method of any of claims 1-10.

13. A power management system (110) configured to perform the method of claim 11.

14. A computer program product comprising instructions which, when executed by a computing device (400), enable the computing device to carry out the method of any of claims 1-11.

15. A computer-readable medium (404, 408) comprising instructions which, when executed by a computing device (400), enable the computing device to carry out the method of any of claims 1-11.
